# EUROPEAN PATENT APPLICATION

(11) **EP 1 741 360 A1**
(43) Date of publication of application: **10.01.2007**
(21) Application number: 05721468.6
(22) Date of filing: 25.03.2005
(51) Int. Cl.: A44C 17/00

(54) **OVAL CUT DIAMOND**

(30) Priority: 09.04.2004 JP 2004115084
(71) Applicant: Hohoemi Brains, Inc., Tokyo (JP)
(72) Inventor: MATSUMURA, Tamotsu, Ayase-shhi, Kanagawa 252-1137 (JP); KAWABUCHI, Yoshinori; c/o HOHOEMI BRAINS, INC., Taito-ku, Tokyo 110-0005 (JP); ITOH, Akira; c/o HOHOEMI BRAINS, INC., Taito-ku, Tokyo 110-0005 (JP)
(74) Representative: Howe, Steven
(86) International application number: PCT/JP2005/005491
(87) International publication number: WO 2005/096867

(57) **Abstract**

An oval-cut diamond comprises a girdle having a contour line in an oval or oval-like shape, a crown above the girdle having an octagonal table facet on a top of it and a pavilion below the girdle. That is a modified oval brilliant cut diamond, in which one of the crown and the pavilion is rotated by about a sixteenth revolution around its central axis from an ordinary brilliant cut diamond. The girdle is of a ratio (b/a) of a short radius to a long radius of 0.6 or more, in which a radius in long axis direction is "a", and a radius in short axis direction is "b". A pair of pavilion main facets positioned opposite to each other with respect to the central axis has a pair of crown main facets or star facets facing the pair of pavilion main facets through the girdle. The two pavilion main facets, the two crown main facets or star facets and the table facet have a common vertical plane within the facets so that brilliancy of reflection lights coming out of the table facet and crown facets is enhanced.

## Description

### TECHNICAL FIELD

The present invention relates to a cut of diamond, and in particular to a cut of diamond having an oval girdle that emits an enhanced brilliancy of reflection lights.

### BACKGROUND ART

As a cut of diamond, a round brilliant cut is generally used. A round brilliant cut diamond has a table facet of a regular octagon on a top of a crown, and eight crown main facets, eight star facets and sixteen upper girdle facets on an outer circumference of the crown between the table facet and a girdle. The diamond further has a culet at an apex below the girdle, and eight pavilion main facets and sixteen lower girdle facets on an outer circumference of a pavilion between the culet and the girdle. So, the round brilliant cut is generally called a 58-facet solid, including the table facet and the culet. And, the round brilliant cut is eight times symmetrical with respect to a central axis.

The present inventors introduced "amount of visual-perceptible reflection rays" for a round brilliant cut diamond, invented a cut design of the diamond enhancing the amount of visual-perceptible reflection rays to evaluate brilliancy that people can perceive when they observe diamonds, and applied it for patent. That has been published as Patent Document 1.

In the above-mentioned patent application about a round brilliant cut diamond, amount of physical reflection rays was obtained in such a manner that meshes are defined by dividing the radius of the diamond into 100 equal segments and the ray density was obtained with respect to each mesh. Since the radius of diamonds is several millimeters, a mesh is an area of several hundred square micrometers. By considering an area perceptible by human eyes, amounts of visual-perceptible reflection rays were obtained by calculating a square root of values of tenths of the amount of physical reflection rays with respect to patterns having areas larger than 30 meshes among patterns of reflection rays from a diamond, and the sum of the amounts of visual-perceptible reflection rays was obtained with respect to all the patterns. That is, the amount of visual-perceptible reflection rays = Σ{(the amount of physical reflection rays with respect to patterns of 30 meshes or more in each segment)/10}^{1/2}.

When people observe a diamond above a table facet of the diamond, light coming from a back of the observer is obstructed by him and does not reach the diamond. On the other hand, light coming with a large angle is not so effective for reflection rays. So, in the previous patent application, light coming into a diamond with an angle of 20 degrees to 45 degrees with a vertical line connecting a center of the table facet to a culet was treated as an effective light, amount of reflection rays due to the incident light within the angle range is called "amount of effective visual-perceptible reflection rays", and a cut design to enhance the amount of effective visual-perceptible reflection rays was also discussed.

Although the amount of effective visual-perceptible reflection rays is effective for a study of reflection rays from a diamond when an incident light uniformly comes around the diamond, it is necessary that strength of the incident light is expressed by using cos²θ, in which θ is incident angle of the incident light, when the light comes from a flat ceiling.

There is an oval-cut diamond having an oval girdle as a modification of the round brilliant cut. The oval-cut diamond has a crown above a girdle, a pavilion below the girdle and a table facet on a top of the crown. An oval-cut diamond that is not symmetrical with respect to a central axis is usually used.

The oval-cut diamond that is not symmetrical with respect to a central axis has a poor brilliancy of reflection rays. Also, there is a round brilliant cut flatly deformed in a breadth wise or a lengthwise direction. For example, refer to Non-Patent Document 1.

The oval-cut diamond has a girdle in an oval shape, a crown provided above the girdle and having a table facet on a top of it and a pavilion below the girdle. The crown and the pavilion in the oval brilliant cut are deformed, following a replacement of a round girdle in a round brilliant cut to an oval girdle. Namely, in the pavilion of the oval brilliant cut there are eight pavilion main facets converging on a culet from crossing points of the oval girdle with long axes and short axes of the girdle and bisectors dividing the angle between the long axis and the short axis equally into two. The pavilion has sixteen lower girdle facets, almost in an oval sector or a triangle, each is a bisection made from a portion surrounded by neighboring pavilion main facets and the girdle. In the oval-cut diamond described in Non-Patent Document 1, a pavilion angle (an angle between a pavilion main facet and a table facet) of pavilion main facets on the short axis side becomes larger than a pavilion angle of pavilion main facets positioned on the long axis side, and a pavilion angle of pavilion main facets in the midpoint between the long axis and the short axis is intermediate between their pavilion angles. In the same manner, an angle of lower girdle facets on the long axis side with the table facet becomes larger than an angle of lower girdle facets on the short axis side with the table facet.

On the other hand, in the crown, vertexes on the long axis side among the vertexes of the octagonal table facet are shifted outside, and vertexes on the short axis side among the vertexes of the octagonal table facet are shifted inside so that the octagonal table facet is lengthened a little in the long axis direction, and lengths in a radial direction and crown angles of crown main facets (it may be called "bezel facet" sometimes) are made equal for all.

As a result of it, the oval brilliant cut diamond is almost equal among the eight crown angles and different among the eight pavilion angles. Also, an angle of each of the sixteen lower girdle facets with the table facet is different among them. Since the pavilion angle of the pavilion main facets on the long axis side is smaller, but the pavilion angle of the pavilion main facets on the short axis side is larger, the pavilion main facet positioned in the midpoint between the long axis and the short axis cannot be directed in a direction of the central axis. Since the diamond has different pavilion angles, different lower girdle facet angles and facets not directed in the central axis direction as explained above, lights reflected on the pavilion main facets and the lower girdle facets and light patterns appearing on these facets are not uniform, because reflection light directions from the facets are not the same, and they are difficult to identify because of extremely fine reflection patterns. Also, the brilliancy on the crown facets and the table facet is very poor.

The present inventors have obtained reflection ray amount based on "the amounts of visual-perceptible reflection rays" introduced in the above-mentioned patent application. An arithmetic mean of "an amount of effective visual-perceptible reflection rays" obtained by an incident light of 20 degrees to 45 degrees and "an amount of visual-perceptible reflection rays" obtained from incident light strength modified by using cos²θ of incident angle θ of an incident light is referred to as "reflection evaluation index". An oval-cut having an enhanced brilliancy of reflection light has been studied, using the reflection evaluation index.
Patent Document 1: Japanese Laid-open Patent 2003-310318
Non-Patent Document 1: THE GIA DIAMOND DICTIONARY 3rd Edition, US, Published by the Gemological Institute of America (GIA), in 1993, Pages 167 to 168

### DISCLOSURE OF THE INVENTION

### PROBLEMS TO BE SOLVED BY THE INVENTION

Therefore, an object of the present invention is to provide an oval-cut diamond having an enhanced brilliancy of reflection lights on observing above a table of the diamond.

### MEANS SOLVING THE PROBLEMS

An oval-cut diamond according to the present invention comprises a columnar girdle, a crown provided above the girdle and having an octagonal table facet on a top of the crown and a pavilion provided below the girdle, and the girdle has an upper ridge between the crown and the girdle and a lower ridge between the pavilion and the girdle. A contour line of a girdle cross-section, parallel to the table facet, is in an oval or oval-like shape. The diamond has a central plane containing a long axis of the contour line and being a plane vertical to the table facet, a straight central axis on the central plane crossing vertically the table facet at a center of the long axis of the contour line of the girdle cross-section, a circumscribed circle having a center on the central axis and circumscribing the contour line at at least one end of the long axis of the contour line, eight-dividing planes composed of the central plane, a plane containing a short axis of the contour line of the girdle cross-section and the central axis and planes dividing an angle around the central axis between the plane containing the short axis and the central axis and the central plane equally into two and second eight-dividing planes dividing an angle around the central axis between two neighboring eight-dividing planes.

The table facet has two opposite vertexes on the central plane and six vertexes symmetrical with respect to the central plane.

The crown has eight tetragonal crown main facets, eight triangular star facets and sixteen upper girdle facets on a diamond circumference between the girdle upper ridge and the table facet. Each of the crown main facets is a tetragon having two opposite vertexes composed of a point, at which each of the eight-dividing planes crosses the girdle upper ridge, and each vertex of the table facet, and other vertexes each owned jointly with each of two other crown main facets neighboring on the crown main facet. Each of the star facets is a triangle having a bottom side coinciding with each side of the table facet and an opposite vertex coinciding with each of the other vertexes jointly owned by two neighboring crown main facets each having a vertex at each end of the bottom side. Each of the upper girdle facets is a triangle or an oval sector having a bottom side coinciding with a side, whose end is on the girdle upper ridge, among sides of the crown main facets and a vertex on the girdle upper ridge.

The pavilion has a bottom apex at a lower end of the central axis, and eight pavilion main facets and sixteen lower girdle facets on the diamond circumference between the bottom apex and the girdle lower ridge. Each of the pavilion main facets is a tetragon or a part of a tetragon extending from the bottom apex toward a crossing point of each of the second eight-dividing planes with the girdle lower ridge on the diamond circumference between the bottom apex and the girdle lower ridge, and having a side, whose end coincides with the bottom apex, jointly owned with each of two other pavilion main facets neighboring on the pavilion main facet. Each of the pavilion main facets is formed with opposite vertexes composed of a crossing point of each of the second eight-dividing planes with the circumscribed circle and the bottom apex. Each of the lower girdle facets is formed between the pavilion main facets and the girdle lower ridge. Each of the lower girdle facet is a triangle or an oval sector having a bottom side coinciding with a side having an end on the girdle lower ridge among sides of each of the pavilion main facets and a vertex on the girdle lower ridge. And, each of the lower girdle facets is disposed on each of both sides of each of the pavilion main facets.

The oval or oval-like shape formed by the contour line of the girdle cross-section has a ratio of a short radius to a long radius (b/a) of 0.6 or more, in which a radius in a long axis direction of the shape (hereinafter, referred to as "long radius") is denoted as "a", and a radius in a short axis direction of the shape (hereinafter, referred to as "short radius") is denoted as "b".

Further, each of the pavilion main facets may have a substantially equal pavilion angle with the table facet. In the case, it is preferable that each pair of pairs of pavilion main facets, of which each pair is composed of two pavilion main facets positioned opposite to each other with respect to the central axis, and the table facet have a common plane vertical to all of them within them, and that each pair of pairs of crown main facets, of which each pair is composed of two crown main facets positioned opposite to each other with respect to the central axis, and the table facet have a common plane vertical to all of them within them.

And, it is preferable that the crown main facets have substantially equal crown angles with the table facet.

Further, it is preferable that a pavilion angle to the table facet each of the pavilion main facets has and a crown angle to the table facet each of the crown main facets has are in a region surrounded by lines connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on a graph drawn with pavilion angles (p) in a vertical line and crown angles (c) in a horizontal line.

Also, it is preferable that the girdle has a substantially equal girdle height around a whole circumference of the girdle, and that facets in the pavilion excluding lower girdle facets neighboring on the long axis have adjusting facets between a respective facet and the girdle lower ridge having a larger angle to the table facet than the pavilion angle and forming a ridge between the respective facet and each of the adjusting facets.

In the oval-cut diamond of the present invention, it is preferable that the central axis of the diamond passes a center of the long axis of the contour line of the girdle cross-section.

In the oval-cut diamond of the present invention, it is preferable that the contour line of the girdle cross-section parallel to the table is oval.

And, the present invention can be applied to a diamond called "marquise" that has a contour line in a shape of two oval sectors (or circle sectors that are a kind of oval sectors) crossing each other on a girdle cross-section parallel to the table facet.

Further, the present invention can be applied to a diamond called "pear-shape" that has a contour line in a shape of three oval sectors (or circle sectors that are a kind of oval sectors) crossing each other on a girdle cross-section parallel to the table facet.

### ADVANTAGES OF THE INVENTION

The oval-cut diamond according to the present invention exhibits an enhanced brilliancy of reflection lights when observed above the table. The brilliancy has been improved by about 200 to 300 % in comparison with that of a diamond flatly deformed in a breadth wise or a lengthwise direction from a round brilliant cut. Also, a girdle height can be substantially equal around the whole girdle circumference so that a good appearance can be obtained.

### BRIEF DESCRIPTION OF DRAWINGS

FIG. 1 shows a top plan view of an oval-cut diamond of EXAMPLE 1 of the present invention;
FIG. 2 shows a bottom plan view of the oval-cut diamond of EXAMPLE 1 of the present invention;
FIG. 3 shows a front view of the oval-cut diamond of EXAMPLE 1 of the present invention;
FIG. 4 shows a side view of the oval-cut diamond of EXAMPLE 1 of the present invention;
FIG. 5 shows an explanatory view of optical paths, using a cross-section of the oval-cut diamond of EXAMPLE 1;
FIG. 6 shows an explanatory view of optical paths, using a cross-section of the oval-cut diamond of EXAMPLE 1;
FIG. 7 shows a top plan view of an oval-cut diamond of EXAMPLE 2;
FIG. 8 shows a bottom plan view of the oval-cut diamond of EXAMPLE 2;
FIG. 9 shows a front view of the oval-cut diamond of EXAMPLE 2;
FIG. 10 shows a side view of the oval-cut diamond of EXAMPLE 2;
FIG. 11 shows a top plan view of an oval-cut diamond of EXAMPLE 3;
FIG. 12 shows a bottom plan view of the oval-cut diamond of EXAMPLE 3;
FIG. 13 shows a front view of the oval-cut diamond of EXAMPLE 3;
FIG. 14 shows a side view of the oval-cut diamond of EXAMPLE 3;
FIG. 15 shows an explanatory view of optical paths, using a cross-section of the oval-cut diamond of EXAMPLE 3;
FIG. 16 shows an explanatory view of optical paths, using a cross-section of the oval-cut diamond of EXAMPLE 3;
FIG. 17 shows a top plan view of a comparative oval-cut diamond;
FIG. 18 shows a bottom plan view of the comparative oval-cut diamond;
FIG. 19 shows a front view of the comparative oval-cut diamond;
FIG. 20 shows a side view of the comparative oval-cut diamond;
FIG. 21 is a graph showing relationship between reflection evaluation indexes and short-long radius ratios (b/a) of the oval-cut diamonds of EXAMPLE 3 of the present invention and the comparative oval-cut diamond;
FIG. 22 is a graph showing a region of pavilion angles (p) and crown angles (c) having desirable reflection evaluation indexes for the oval-cut diamonds of the present invention; and
FIG. 23 is an explanatory view of an observation method of the oval-cut diamond.

### EXPLANATION OF REFERENCE NUMERALS

- 100, 200, 300:: oval-cut diamond
- 110, 210, 310:: girdle
- 120:: crown
- 122:: table facet
- 126:: crown main facet
- 132:: star facet
- 136:: upper girdle facet
- 140, 340:: pavilion
- 142, 144, 342, 344:: pavilion main facet
- 152, 352:: lower girdle facet
- 162, 362:: bottom apex
- 170:: eight-dividing plane
- 180', 180":: second eight-dividing plane
- 394, 398a, 398b, 398c:: adjusting facet
- 398:: ridge

### BEST MODE FOR CARRYING OUT OF THE INVENTION

The present invention is described below in detail with reference to EXAMPLES.

### EXAMPLE 1

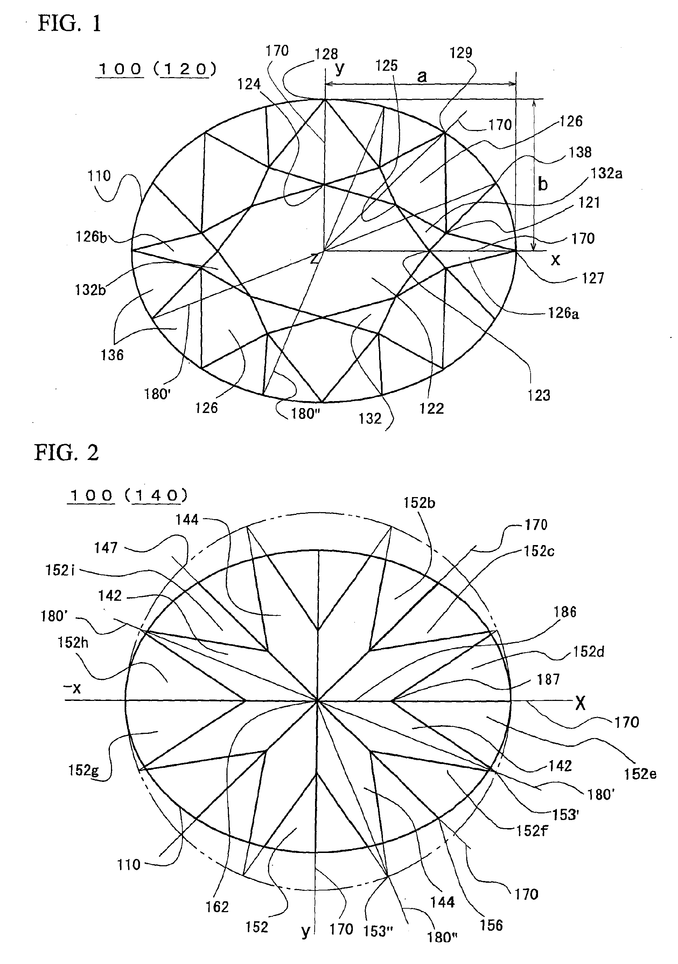

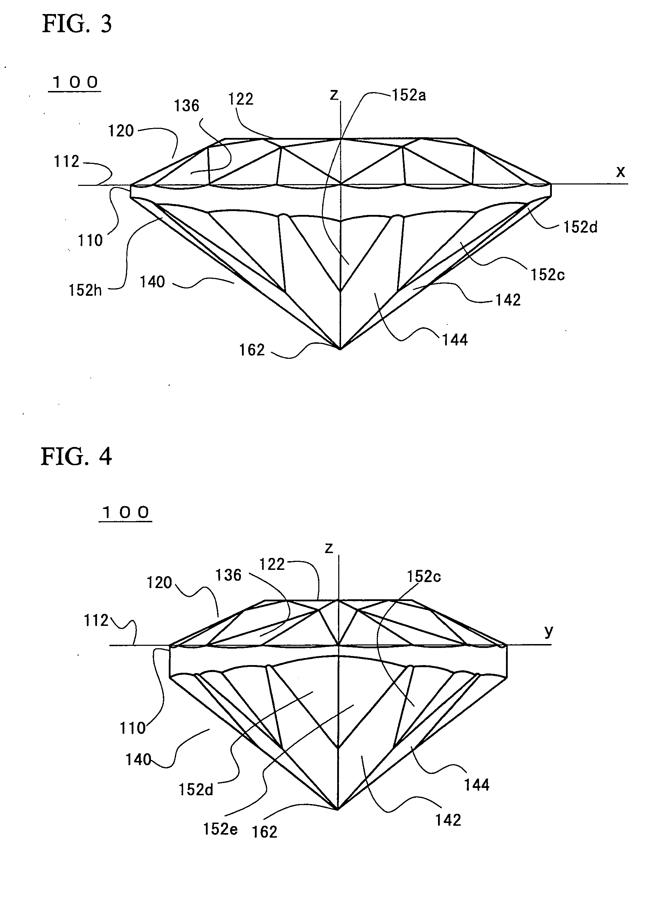

An oval-cut diamond according to the present invention will be described in detail with reference to the drawings showing EXAMPLE 1. FIG. 1 shows a top plan view of the oval-cut diamond of EXAMPLE 1 of the present invention, FIG. 2 shows a bottom plan view thereof, FIG. 3 shows a front view thereof, and FIG. 4 shows a side view thereof. In these drawings, the oval-cut diamond 100 comprises a columnar girdle 110, a crown 120 provided above the girdle 110, and a pavilion 140 provided below the girdle 110. The crown 120 has an octagonal table facet 122 on a top of the crown. FIG. 1 shows the crown 120 seen from the above, and FIG. 2 shows the pavilion 140 seen from the bottom.

An oval brilliant cut diamond comprises a girdle having an oval cross-section, a crown provided above the girdle and having a table facet on a top of the crown, and a pavilion provided below the girdle. The girdle has an upper ridge between the crown and the girdle and a lower ridge between the pavilion and the girdle. The crown and the pavilion in the oval brilliant cut diamond are shaped to have an oval girdle replacing a round girdle in a round brilliant cut diamond.

As is apparent from FIGS. 1 and 2, in the oval-cut diamond in EXAMPLE 1, a cross-section of the girdle 110 parallel to the table facet is oval. However, besides the diamond having the oval girdle cross-section, the present invention can be applied to a diamond that has a contour line of a girdle cross-section, parallel to a table facet, in an oval or oval-like shape, for example diamonds called "marquis" and "pear-shape".

For convenience in the following descriptions, a plane that contains a long axis of the contour line of the girdle cross-section and is vertical to the table facet is a central plane, a straight line on the central plane crossing vertically the table facet 122 at the midpoint of the long axis of the contour line, that is, a center of the octagonal table facet 122 is a central axis, which is a z-axis. An origin point of the z-axis is on an upper cross-section of the girdle, that is, a cross-section between the crown and the girdle. From the origin point, an x-axis is drawn in a long axis direction of the girdle, and a y-axis is drawn in a short axis of the girdle. Then, bisectors are drawn dividing angles between the long axis and the short axis substantially equally into two. Planes containing the central axis (the z-axis) and extending in directions of the x-axis, the bisectors, and the y-axis are called eight-dividing planes 170. Planes dividing an angle around the central axis (the z-axis) between neighboring eight-dividing planes 170 equally into two are called second eight-dividing planes. Among the second eight-dividing planes, planes between the x-axis and the bisectors are second eight-dividing planes 180', and planes between the bisectors and the y-axis are second eight-dividing plane 180".

With reference to FIGS. 1, 3 and 4, two opposite vertexes 123 of the table facet 122 are positioned on an eight-dividing plane 170 in the x-axis direction and an eight-dividing plane in a -x-axis direction, that is, on the central plane, and six other vertexes 124 and 125 are symmetrical with respect to the central plane. In FIG. 1, the table facet 122 is symmetrical with respect to the y-axis, and the two vertexes 124 are positioned on an eight-dividing plane 170 containing the y-axis. The crown 120 has, in addition to the table facet 122, eight tetragonal crown main facets 126, eight triangular star facets 132, and sixteen upper girdle facets 136.

The two opposite vertexes 123 of the table facet 122 are at a substantially equal distance from the central axis (the z-axis) in the x-axis direction (the long axis direction) on the central plane, and the two opposite vertexes 124 are at a substantially equal distance from the central axis in the y-axis direction (the short axis direction), and other four vertexes 125 are positioned at a substantially equal distance from the central axis in directions of the bisectors dividing the angle between the long axis and the short axis equally into two, though not always on the bisectors.

Each of the crown main facets 126 is a tetragon having two opposite vertexes 127 and 123, 129 and 125, or 128 and 124 composed of points 127, 129 and 128, at which each of the eight-dividing planes 170 crosses the upper ridge of the girdle 10, and vertexes 123, 125 and 124 of the table facet 122, and other vertexes 121 each owned jointly with each of two neighboring crown main facets 126. Each of the crown main facets 126 crosses vertically each of the eight-dividing planes. The eight crown main facets preferably have an equal angle (crown angle (c)) with the table facet.

The crown main facets 126 are formed so that planes crossing vertically the eight-dividing planes and having an equal angle with the table facet pass each vertex of the table facet. Points at which intersecting lines of the planes with the eight-dividing planes cross the girdle can be vertexes of the crown main facets on the girdle. For example, for a crown main facet 126 in a direction dividing an angle between the x-axis and the y-axis equally into two, a plane that crosses vertically an eight-dividing plane in the direction dividing the angle between the x-axis and the y-axis equally into two and has a predetermined crown angle is formed to pass the vertex 125 of the table facet. A point 129 at which the intersecting line of the plane with the eight-dividing plane 170 crosses the girdle 110 is a vertex on the girdle. Thus, the crown main facet 126 has two opposite vertexes 125 and 129. Other seven crown main facets 126 are formed similarly. Points of equal depths from the table facets on the intersection lines of neighboring crown main facets are vertexes 121. The eight tetragonal crown main facets 126 thus formed each cross vertically the eight-dividing planes, and have an equal crown angle (c).

Each of the star facets 132 is a triangle having a bottom side coinciding with each side of the table facet 122 (for example, a line segment 123-125), and a vertex coinciding with a point 121 jointly owned by two neighboring crown main facets 126 and 126 each having vertexes at opposite ends 123 and 125 of the bottom side (for example, 123-125).

Each of the upper girdle facets 136 has a bottom side coinciding with a side (for example, 127-121), whose end (for example, 127) is on the upper ridge of the girdle 110, among sides of the crown main facet 126, and a vertex (for example, 138) on the girdle upper ridge. The upper girdle facet 136 is generally a triangle, but is sometimes an oval sector with an intersecting line with the girdle being an oval sector as shown. In this example, two upper girdle facets 136 are neighboring with a boundary coinciding with a line connecting a crossing point of the eight-dividing plane 170 and the girdle 110 and the vertex 121 jointly owned by neighboring crown main facets.

With reference to FIGS. 2 to 4, the pavilion 140 has a bottom apex 162, that is, a culet at a lower end of the central axis. The pavilion 140 is an oval cone between the bottom apex 162 and the lower ridge of the girdle 110, and has eight pavilion main facets 142 and 144 and sixteen lower girdle facets on an outer periphery of the pavilion 140.

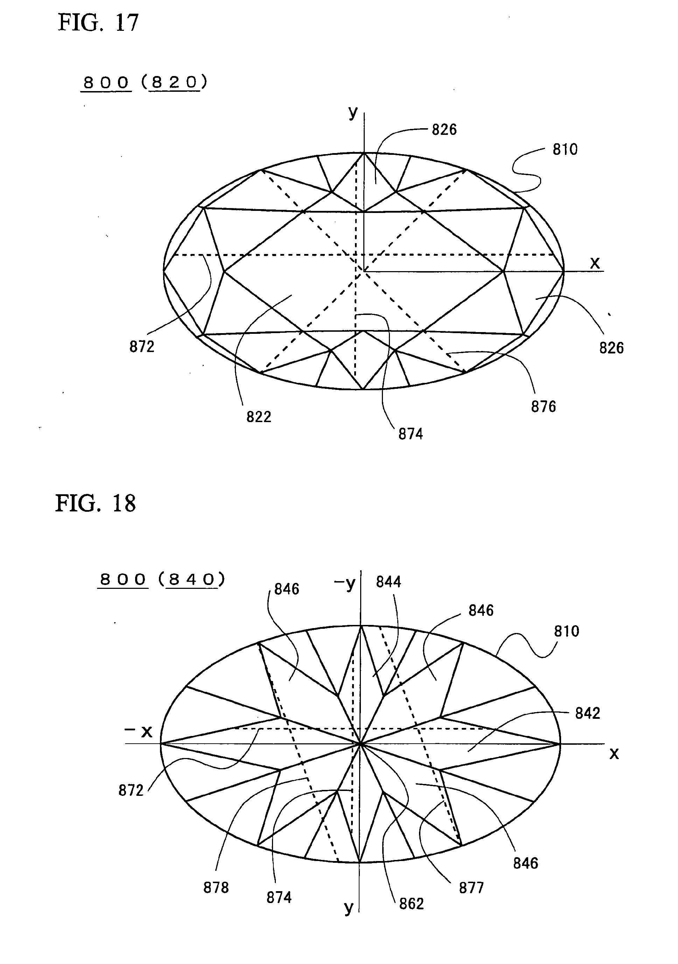

As is apparent from a comparison between the pavilion 140 in the bottom view in FIG. 2 and a pavilion 840 of an oval-cut diamond 800 according to a comparative example in FIG. 18 described later, in the oval-cut diamond 100 according to the present invention, the pavilion main facets and the lower girdle facets are provided in a position where the pavilion 840 in the comparative example is rotated by 22.5° (a sixteenth revolution) around the central axis (the z-axis). Thus, the diamond according to the present invention is a modified oval-cut diamond.

The pavilion main facets 142 and 144 extend from the bottom apex 162 in directions of the second eight-dividing planes 180' and 180" between the bottom apex 162 and the lower ridge of the girdle 110, and each of the pavilion main facet 142 extending in the direction of the second eight-dividing plane 180' and the pavilion main facet 144 extending in the direction of the second eight-dividing plane 180" is a tetragon or a part of a tetragon. The pavilion main facet 142 jointly owns a side 186, whose end is the bottom apex 162, with a neighboring pavilion main facet 144. The pavilion main facet 142 jointly owns a side 186 (a side extending in the x-axis direction), whose end is the bottom apex 162, with a neighboring pavilion main facet 142 across the x-axis. The pavilion main facet 144 jointly owns a side 186 (a side extending in the y-axis direction), whose end is the bottom apex 162, with a neighboring pavilion main facet 144 across the y-axis.

Each of the lower girdle facets is a triangle or an oval sector formed between each of the pavilion main facets 142 and 144 and the lower ridge of the girdle 110 on an outer peripheral surface of the oval cone of the pavilion, and having a bottom side coinciding with a side, whose end is on the girdle lower ridge, among sides of the pavilion main facets, and a vertex on the girdle lower ridge.

A circumscribed circle 147 circumscribing the girdle at opposite ends of the long axis of the girdle 110 is drawn around the central axis (see FIG. 2). The second eight-dividing planes 180' and 180" cross the circumscribed circle 147 at points 153 and 153". The pavilion main facets 142 and 144 have two opposite vertexes composed of the bottom apex 162 and the points 153' and 153". Each of the pavilion main facets 142 and 144 jointly owns a side 186, whose end is the bottom apex 162, and the other end 187 of the side 186 with a neighboring pavilion main facet. Thus, each of the pavilion main facets has a diagonal line connecting two opposite vertexes composed of a point on a circumference of the circumscribed circle 147 and the bottom apex 162, and has a substantially equal angle (pavilion angle) between the diagonal line and the table facet. As is apparent from FIG. 2, on the short axis side, a short radius of the girdle 110 is smaller than a radius of the circumscribed circle 147, and a tip of the pavilion main facet 144 on the girdle side in the direction of the second eight-dividing plane 180" near the short axis is broadly cut to form a part of a tetragon. A tip of the pavilion main facet 142 on the girdle side in the direction of the second eight-dividing plane 180' near the long axis is also slightly cut to form a part of a tetragon.

With reference to FIG. 2, the lower girdle facets (for example, 152b and 152c) have sides (line segments 187-153' and 187-153") passing the other end 187 of the side 186 jointly owned by the two neighboring pavilion main facets 142 and 144, and the crossing points 153' and 153" of the second eight-dividing planes 180' and 180" and the circumscribed circle 147. The lower girdle facet has a vertex coinciding with a point 156 at which a plane (an eight-dividing plane) 170 dividing an angle between the two neighboring second eight-dividing planes 180' and 180" equally into two crosses the girdle 110. Thus, the lower girdle facet (for example, 152b and 152c) is a triangle or an oval sector between the line segment 187-153' (or 187-153") and the line segment 156-187.

In EXAMPLE 1, the pavilion main facets 142 and 144 connect the bottom apex 162 of the central axis and the points 153' and 153" on the circumscribed circle 147, and the pavilion main facets cross vertically the second eight-dividing planes, and have an equal angle (pavilion angle (p)) with the table facet 122. As described above, the crown 120 preferably has the structure in which the eight crown main facets cross vertically the eight-dividing planes, and have an equal angle (crown angle (c)) with the table facet 122.

The oval-cut diamond 100 according to the example does not have an equal girdle height around a whole circumference of the girdle. The oval-cut diamond 100 has a small girdle height on the long axis side, and a large girdle height on the short axis side. In the crown, points at which each of ridges between neighboring upper girdle facets and each of ridges between the upper girdle facets and the crown main facets cross the girdle are successively connected to form a substantially straight line 112. However, the pavilion main facets 142 and 144 have diagonal lines connecting the bottom apex and the points on the circumscribed circle 147, and thus the pavilion main facet 142 near the x-axis crosses the oval girdle 110 near the circumscribed circle 147, and the pavilion main facet 144 near the y-axis crosses the oval girdle 110 at a distance from the circumscribed circle 147 in a -z-axis direction. Thus, as shown in FIGS. 3 and 4, the girdle height is small on the long axis side, large on the short axis side, and intermediate on the bisector side between the x-axis and the y-axis.

In the oval or oval-like shape formed by the contour line of the girdle, as shown in FIG. 1, a radius in the long axis direction (a long radius) is denoted as "a", and a radius in the short axis direction (a short radius) is denoted as "b". The oval-cut diamond according to the present invention needs to have a ratio (b/a) of a short radius to a long radius, hereinafter referred to as short-long radius ratio (b/a), of 0.6 or more, and preferably more than 0.7.

The oval-cut diamond 100 has four pairs of pavilion main facets, of which each pair is composed of two pavilion main facets positioned opposite to each other with respect to the central axis. The pairs each composed of two pavilion main facets positioned opposite to each other with respect to the central axis are two pairs of two pavilion main facets 142 extending in the directions of the second eight-dividing planes 180', and two pairs of two pavilion main facets 144 extending in the directions of the second eight-dividing planes 180". The two pavilion main facets constituting each pair of pavilion main facets and the table facet have a common vertical plane within them. Further, the diamond 100 has four pairs of crown main facets, of which each pair is composed of two crown main facets positioned opposite to each other with respect to the central axis. The pairs of crown main facets positioned opposite to each other with respect to the central axis are a pair of crown main facets extending in the x-axis direction, a pair of crown main facets extending in the y-axis direction, and two pairs of crown main facets extending in the directions of the bisectors. The two crown main facets constituting each pair of crown main facets and the table facet have a common vertical plane within them. Also, the pavilion main facets have a substantially equal angle (pavilion angle (p)) with the table facet. The diamond 100 having such a facet configuration has an enhanced brilliancy.

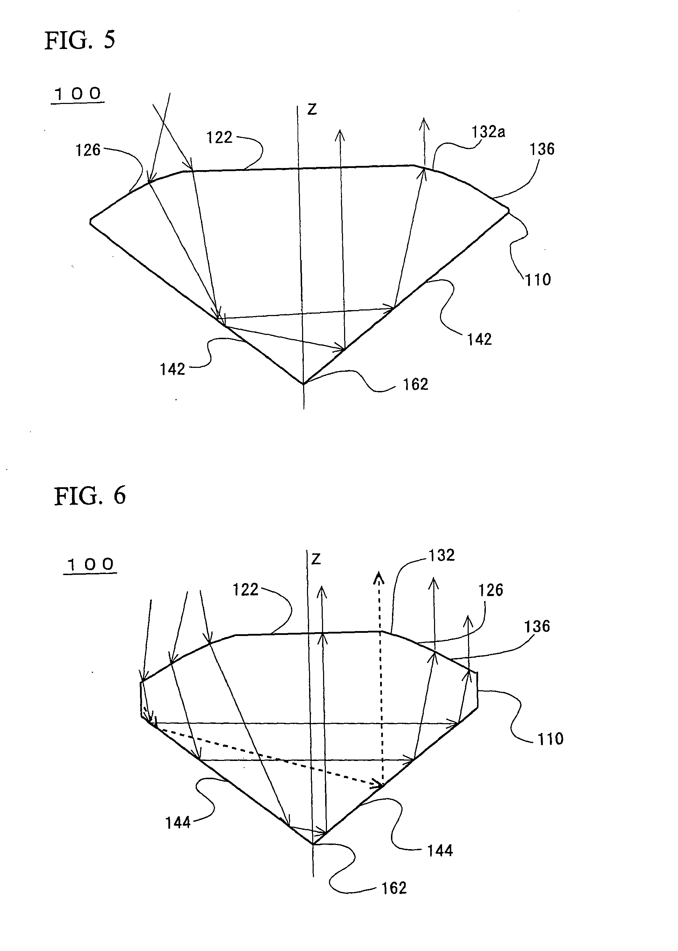

FIG. 5 shows optical paths, using a cross-section of the second eight-dividing plane 180' of the oval-cut diamond 100 of EXAMPLE 1. In this cross-section, the table facet 122, the pavilion main facet 142, and the pavilion main facet 142 opposite to the pavilion main facet with respect to the z-axis have a common vertical surface within them. Light coming into a facet on the crown is refracted or reflected by the facet, and the coming light or the refracted or reflected light travels along a vertical plane on the facet. The table facet and the two pavilion main facets have the common vertical plane, and thus there is light passing through or reflected by all the facets. The light passing through the table facet 122 and coming into the diamond 100 from outside is refracted by the table facet, and travels toward the pavilion main facet 142. The light is reflected by the pavilion main facet 142, travels toward the pavilion main facet 142 on the opposite side with respect to the z-axis, and is reflected. The light passes through the table facet 122 and goes out of the diamond 100.

Thus, the light comes from the table facet or the facet on the crown, is reflected twice in the diamond, and goes out of the diamond 100 from the table facet or the facet on the crown. Light coming from the table facet or the facet on the crown, reflected twice in the diamond, and going out of the diamond 100 from the table facet or the facet on the crown has the most enhanced brilliancy. The larger number of times of reflection reduces strength.

Light coming into a -x-axis side half of the table facet 122 or the star facet 132b on that side travels toward the pavilion main facet 142 on the opposite side of the girdle, and also, a part of the light travels toward lower girdle facets 152i and 152h on opposite sides of the pavilion main facet 142. Light coming from the two crown main facets 126b and 126 on opposite sides of the star facet 132b, and a part of light coming from the two upper girdle facets 136 between the crown main facet and the girdle travel toward the lower girdle facets 152i and 152h on opposite sides of the pavilion main facet 142. A part of light reflected by the lower girdle facets 152i and 152h and a part of light reflected by the pavilion main facet 142 travel toward lower girdle facets 152e and 152f on opposite sides of the pavilion main facet 142 on the opposite side with respect to the z-axis (+ z-axis side), and are reflected. A part of the light passes through the two crown main facets and the two upper girdle facets around the star facet 132a on the + x-axis side and goes out of the diamond 100, and the crown main facets and the upper girdle facets 136 also become brilliant.

In the diamond 100, one of the pavilion and the crown is rotated by about 22.5° (a sixteenth revolution) around its central axis from the position of an ordinary brilliant cut diamond. Thus, the crown main facet (for example, the crown main facet on the + x-axis side) 126a does not face any pavilion main facet across the girdle, but simply partially faces two pavilion main facets extending in the + x-axis direction. However, the crown main facet 126a faces two lower girdle facets 152d and 152e extending in the + x-axis direction across the girdle. The crown main facet 126b on the -x-axis side faces the two lower girdle facets 152g and 152h extending in the -x-axis direction across the girdle. The four pavilion main facets (the pavilion main facets extending in the directions of the second eight-dividing planes 180') interposing the four lower girdle facets 152d, 152e, 152g and 152h have an equal pavilion angle, and the pavilion main facets symmetrical with respect to the central axis have a common vertical plane, that is, a vertical plane passing the central axis. Thus, the two lower girdle facets 152d and 152g and the two lower girdle facets 152e and 152h symmetrical with respect to the central axis have opposite signs in an x-component and a y-component of a vector in a plane direction. Namely, the lower girdle facets 152d and 152g and the table facet 122 have a common vertical plane. Similarly, the lower girdle facets 152e and 152h and the table facet 122 have a common vertical plane.

If these facets have no common vertical plane, and for example, a pair of pavilion main facets extending in the directions of the second eight-dividing planes 180' have no common vertical plane within them, light reaching one of the pavilion main facets do not travel toward the other pavilion main facet. Thus, the light is reflected four to six times or more in the diamond and goes out of the diamond from the table facet or the crown main facets, or passes without being reflected by the pavilion main facets or the lower girdle facets, thereby reducing a brilliancy of the diamond. In the oval brilliant cut diamond, the pavilion is used embedded in a seat as in the round brilliant cut diamond, and thus light going out of the diamond from each facet on the pavilion does not contribute to the brilliancy.

FIG. 6 shows optical paths, using a cross-section of the second eight-dividing plane 180" of the oval-cut diamond 100 of EXAMPLE 1. Light passing through a -y-axis side half of the table facet 122 or the facet on the crown and coming into the diamond 100 from outside is refracted by the table facet or the facet on the crown, reflected by the pavilion main facet 144, travels toward the pavilion main facet 144 on the opposite side with respect to the z-axis, and is reflected. The light passes through the table facet 122 or the facet on the crown, and goes out of the diamond. Also in this case, the light coming into the diamond is reflected twice in the diamond and goes out from the table facet or the facet on the crown, and thus has an enhanced brilliancy. However, a portion near an outer periphery of the table facet 122 is shadowed. In order for the light to go out from the portion near an outer periphery of the table facet 122, as shown by a thick broken line in FIG. 6, there needs to be light reflected by an inner surface of the girdle or having passed through the girdle. Such light is little or slight, and thus the portion near the outer periphery of the table facet is shadowed.

Table 1 shows the results of calculation of reflection evaluation indexes of the oval-cut diamond (a short-long radius ratio (b/a) of 0.8) of EXAMPLE 1. As is apparent from Table 1, the reflection evaluation indexes of the diamond are 308 and 321, and the diamond has a more enhanced brilliancy than a diamond of a comparative example described later. The shown reflection evaluation indexes are substantially equal to those of EXAMPLE 3 having adjusting facets.

**TABLE 1**

| Sample | Short-Long Radius Ratio (b/a) | Pavilion Angle (p) | Crown Angle (c) | Reflection Evaluation Index |
|---|---|---|---|---|
| 1 | 0.8 | 39 degrees | 24 degrees | 308 |
| 2 | 0.8 | 40 degrees | 26 degrees | 321 |

### EXAMPLE 2

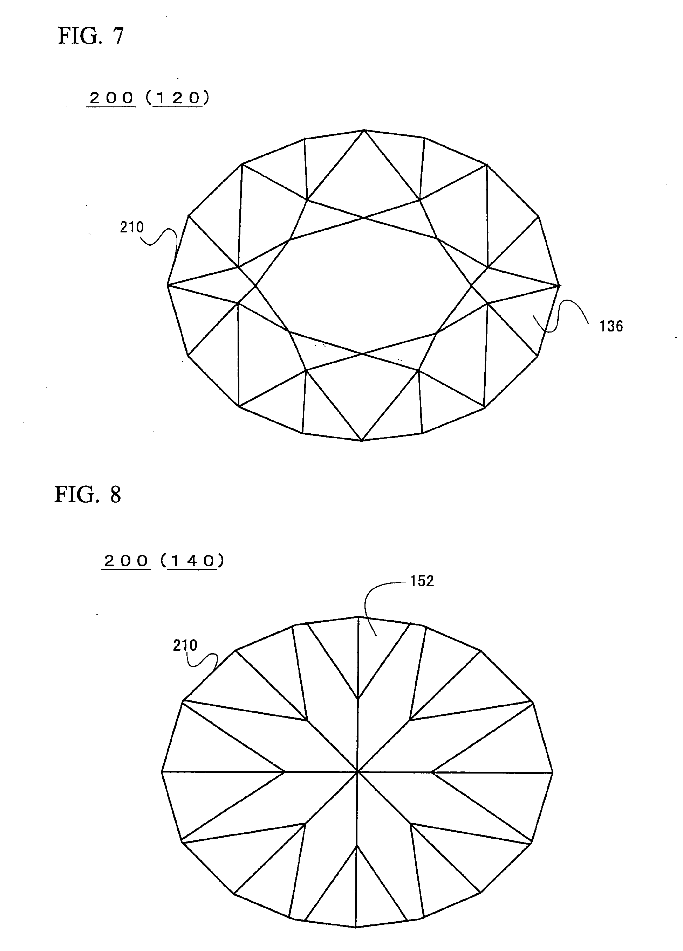

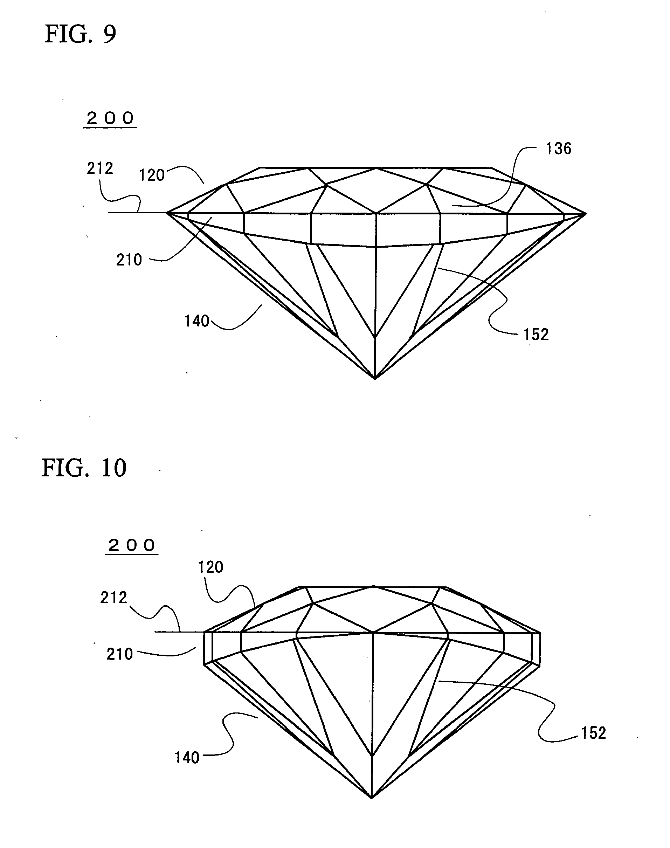

An oval-cut diamond 200 according to EXAMPLE 2 of the present invention will be described with reference to FIGS. 7 to 10. FIG. 7 shows a top plan view of the diamond 200, FIG. 8 shows a bottom plan view thereof, FIG. 9 shows a front view thereof, and FIG. 10 shows a side view thereof. In these drawings and the following description, the same components as in the diamond 100 of EXAMPLE 1 are denoted by the same reference numerals. The diamond 200 comprises a columnar girdle 210, a crown 120 provided above the girdle 210, and a pavilion 140 provided below the girdle 210. The crown 120 and the pavilion 140 of the diamond 200 have the same structures as the crown 120 and the pavilion 140 of the diamond 100 of EXAMPLE 1.

A horizontal cross-section of the girdle 210 has sixteen sides. Each of upper girdle facets 136 crosses an outer peripheral surface of the girdle 210 with a straight line, and each of lower girdle facets 152 crosses the outer peripheral surface of the girdle 210 with a straight line, and an intersection line of the upper girdle facet 136 and the outer peripheral surface of the girdle is a substantially straight line 212, while a line connecting opposite ends of an intersection line of the lower girdle facet and the outer peripheral surface of the girdle is curved downward on a short axis side and upward on a long axis side to form an oval. Thus, a girdle height is smaller on the long axis side, larger on the short axis side, and intermediate in the midpoint between the long axis side and the short axis side. In the diamond 200, structures of the facets of the crown and the pavilion are the same as those in the diamond 100, and a reflection property is also the same as the diamond 100.

### EXAMPLE 3

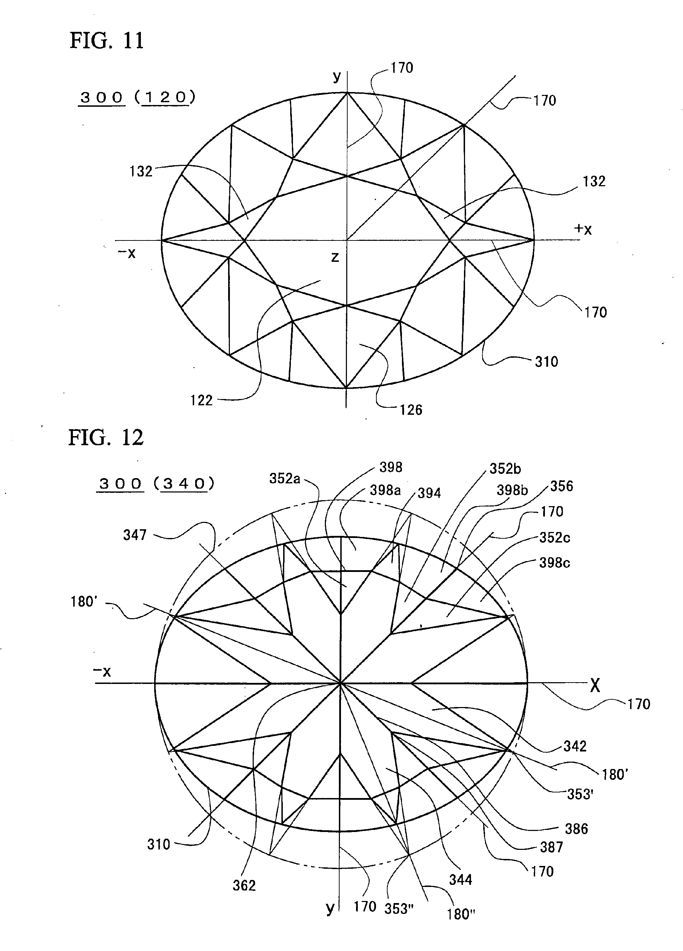

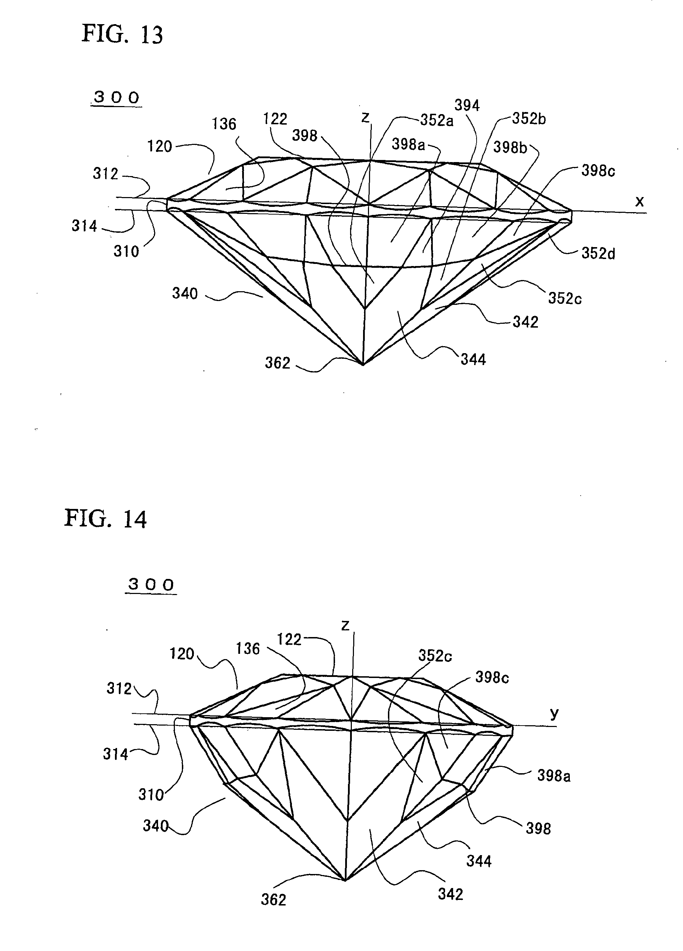

EXAMPLE 3 of an oval-cut diamond of the present invention will be descried in detail with reference to the drawings. FIG. 11 shows a top plan view of the oval-cut diamond of EXAMPLE 3 of the present invention, FIG. 12 shows a bottom plan view thereof, FIG. 13 shows a front view thereof, and FIG. 14 shows a side view thereof. In these drawings, the oval-cut diamond 300 comprises a columnar girdle 310, a crown 120 provided above the girdle 310, and a pavilion 340 provided below the girdle 310. The crown 120 has an octagonal table facet 122 on a top of the crown. FIG. 11 shows the crown 120 seen from the above and is substantially the same as FIG. 1, and FIG. 12 shows the pavilion 340 seen from the bottom. In these drawings and the following description, the same components as in EXAMPLE 1 are denoted by the same reference numerals.

In FIGS. 11, 13 and 14, the crown 120 is the same as that in EXAMPLE 1, and the description thereof will be omitted.

With reference to FIGS. 12 to 14, the pavilion 340 has a bottom apex 362, that is, a culet at a lower end of a central axis. The pavilion 340 is a substantially oval cone between the bottom apex 362 and a lower ridge of the girdle 310, and has eight pavilion main facets 342 and 344 and sixteen lower girdle facets on an outer periphery.

The pavilion main facets 342 and 344 extend from the bottom apex 362 in directions of second eight-dividing planes 180' and 180" between the bottom apex 362 and the lower ridge of the girdle 310, and each of the pavilion main facet 342 extending in the direction of the second eight-dividing plane 180' and the pavilion main facet 344 extending in the direction of the second eight-dividing plane 180" is a tetragon or a part of a tetragon. The pavilion main facet 342 jointly owns a side 386, whose end is the bottom apex 362, with a neighboring pavilion main facet 344. The pavilion main facet 342 jointly owns a side 386 (a side extending in the x-axis direction), whose end is the bottom apex 362, with a neighboring pavilion main facet 342 across the x-axis. The pavilion main facet 344 jointly owns a side 386 (a side extending in the y-axis direction), whose end is the bottom apex 362, with a neighboring pavilion main facet 344 across the y-axis.

Each of the lower girdle facets is a triangle or an oval sector formed between each of the pavilion main facets 342 and 344 and the lower ridge of the girdle 310 on an outer peripheral surface of the oval cone of the pavilion, and having a bottom side coinciding with a side, whose end is on the girdle lower ridge, among sides of the pavilion main facets, and a vertex on the girdle lower ridge.

A circumscribed circle 347 circumscribing the girdle at opposite ends of the long axis of the girdle 310 is drawn around the central axis (see FIG. 12). The second eight-dividing planes 180' and 180" cross the circumscribed circle 347 at points 353 and 353". The pavilion main facets 342 and 344 have two opposite vertexes composed of the bottom apex 362 and the points 353' and 353". Each of the pavilion main facets 342 and 344 jointly owns a side 386, whose end is the bottom apex 362, and the other end 387 of the side 386 with a neighboring pavilion main facet. Thus, each of the pavilion main facets has a diagonal line connecting two opposite vertexes composed of a point on a circumference of the circumscribed circle 347 and the bottom apex 362, and has a substantially equal angle (pavilion angle) between the diagonal line and the table facet. As is apparent from FIG. 12, on the short axis side, a short radius of the girdle 310 is smaller than a radius of the circumscribed circle 347, and a tip of the pavilion main facet 344 on the girdle side in the direction of the second eight-dividing plane 180" near the short axis is broadly cut to form a part of a tetragon. A tip of the pavilion main facet 342 on the girdle side in the direction of the second eight-dividing plane 180' near the long axis is also slightly cut to form a part of a tetragon.

With reference to FIG. 12, the lower girdle facets (for example, 352b and 352c) have sides (line segments 387-353' and 387-353") passing the other end 387 of the side 386 jointly owned by the two neighboring pavilion main facets 342 and 344, and the crossing points 353' and 353" of the second eight-dividing planes 180' and 180" and the circumscribed circle 347. The lower girdle facet has a vertex coinciding with a point 356 at which a plane (an eight-dividing plane) 170 dividing an angle between the two neighboring second eight-dividing planes 180' and 180" equally into two crosses the girdle 310. Thus, the lower girdle facet (for example, 352b and 352c) is a triangle or an oval sector between the line segment 387-353' (or 387-353") and the line segment 356-387.

In EXAMPLE 3, the pavilion main facets 342 and 344 connect the bottom apex 362 of the central axis and the points 353' and 353" on the circumscribed circle 347, and the pavilion main facets cross vertically the second eight-dividing planes, and have an equal angle (pavilion angle (p)) with the table facets 122. As described above, the crown 120 preferably has the structure in which the eight crown main facets cross vertically the eight-dividing planes, and have an equal angle (crown angle (c)) with the table facet 122.

In the diamond 300, adjusting facets are formed between the pavilion main facets 342 and 344 formed on the pavilion 340 and the girdle lower ridge and between the lower girdle facets 352a, 352b and 352c and the girdle lower ridge.

As the adjusting facet, a tetragonal facet 398a is provided near the girdle of the lower girdle facet 352a on the short axis side. An intersecting line of the lower girdle facet 352a with the adjusting facet 398a forms a ridge 398. A distance from a zx-plane to the ridge 398 is preferably 0.5a to 0.6a in long radius (a). The ridge 398 extends across pavilion main facets 344 on opposite sides of the lower girdle facet 352a, a lower girdle facet 352b placed between the pavilion main facet 344 and the eight-dividing plane 170, and a neighboring lower girdle facet 352c, and crosses the girdle 310 in the middle of the pavilion main facet 342. The ridge 398 forms an adjusting facet 394 between the pavilion main facet 344 and the girdle 310, an adjusting facet 398b between the lower girdle facet 352b and the girdle 310, an adjusting facet 398c between the lower girdle facet 352c and the girdle 310, and a small adjusting facet between the pavilion main facet 342 and the girdle 310.

It is preferable that the adjusting facet 394 provided in the pavilion main facet 344 near the short axis has a slightly larger angle than a pavilion angle with the table facet, and that the adjusting facets 398a, 394, 398b and 398c are formed so that a girdle height is substantially equal around a whole circumference. As shown in a front view in FIG. 13 and a side view in FIG. 14, in a ridge between the girdle 310 and the crown 120, a middle of a lower end of each of the upper girdle facets 136 protrudes toward the girdle, and in a ridge between the girdle 310 and the pavilion 340, a middle of an upper end of each of the lower girdle facets and the adjusting facets 398a, 398b and 398c protrudes toward the girdle. In those portions, the girdle height seems to be small. The middle of the lower end of the upper girdle facet and the middle of the upper end of the lower girdle facet or the middle of the upper end of the adjusting facet protrude toward the girdle because the girdle has an oval outer peripheral surface, and the girdle height can be substantially equal around the whole circumstance of the girdle by defining the girdle height according to a distance between a straight line 312 connecting points at which ridges between the upper girdle facets or ridges between the facets and the crown main facets cross the girdle and a straight line 314 connecting points at which ridges between the lower girdle facets and the pavilion main facets and ridges between the adjusting facets cross the girdle. The outer peripheral surface of the girdle is preferably interposed between the straight lines at upper and lower ends. However, from the need for facet polishing, the girdle height can be changed to about 15% of the long radius (a).

The oval-cut diamond 300 has four pairs of pavilion main facets, of which each pair is composed of two pavilion main facets positioned opposite to each other with respect to the central axis. The pairs each composed of two pavilion main facets positioned opposite to each other with respect to the central axis are two pairs of two pavilion main facets 342 extending in the directions of the second eight-dividing planes 180', and two pairs of two pavilion main facets 344 extending in the directions of the second eight-dividing planes 180". The two pavilion main facets constituting each pair of pavilion main facets and the table facet have a common vertical plane within them. Further, the diamond 300 has four pairs of crown main facets, of which each pair is composed of two crown main facets positioned opposite to each other with respect to the central axis. The pairs of crown main facets positioned opposite to each other with respect to the central axis are a pair of crown main facets extending in the x-axis direction, a pair of crown main facets extending in the y-axis direction, and two pairs of crown main facets extending in the directions of the bisectors. The two crown main facets constituting each pair of crown main facets and the table facet have a common vertical plane within them. Also, the pavilion main facets have a substantially equal angle (pavilion angle (p)) with the table facet. The diamond 300 having such a facet configuration has an enhanced brilliancy.

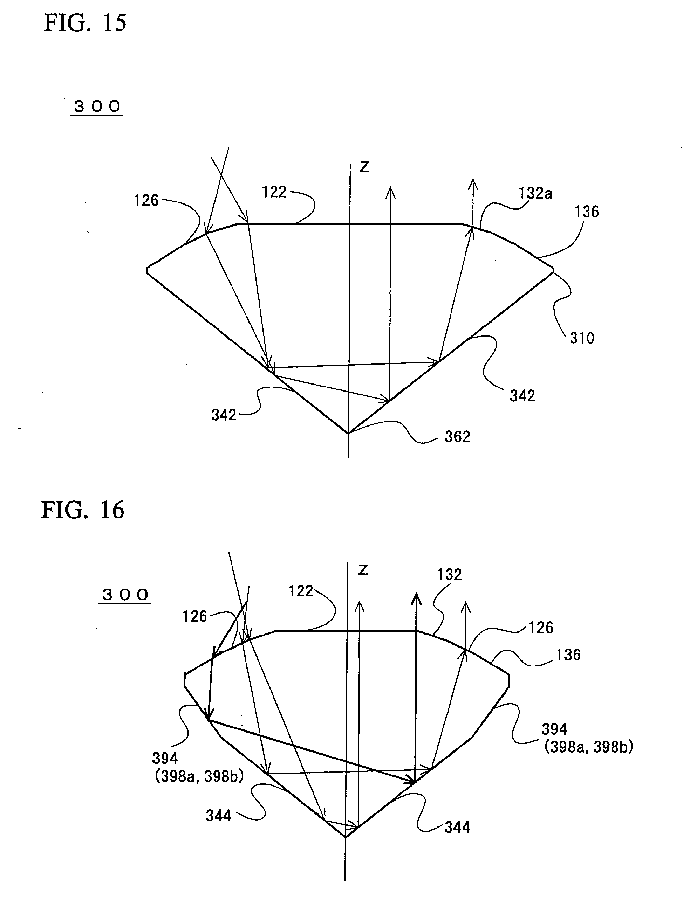

FIG. 15 shows optical paths, using a cross-section of the second eight-dividing plane 180' of the oval-cut diamond 300 of EXAMPLE 3. The optical path in the cross-section is similar to that described in EXAMPLE 1 with reference to FIG. 5, and the description thereof will be omitted.

FIG. 16 shows an optical path in the second eight-dividing plane 180" of the oval-cut diamond 300 of EXAMPLE 3. Light passing through the table facet 122 or the facet on the crown and coming into the diamond 300 from outside is refracted by the table facet or the facet on the crown, reflected by the pavilion main facet 344, travels toward the pavilion main facet 344 on the opposite side with respect to the z-axis, and is reflected. The light passes through the table facet 122 or the facet on the crown, and goes out of the diamond. As shown by a thick solid line, light reflected by the adjusting facets 394 or 398a and 398b immediately below the girdle comes from a portion near the outer periphery of the table facet 122, and thus the portion becomes brilliant. In this point, the diamond 300 of EXAMPLE 3 is superior to the diamond 100 of EXAMPLE 1.

### Comparison between EXAMPLE 3 and Comparative Example

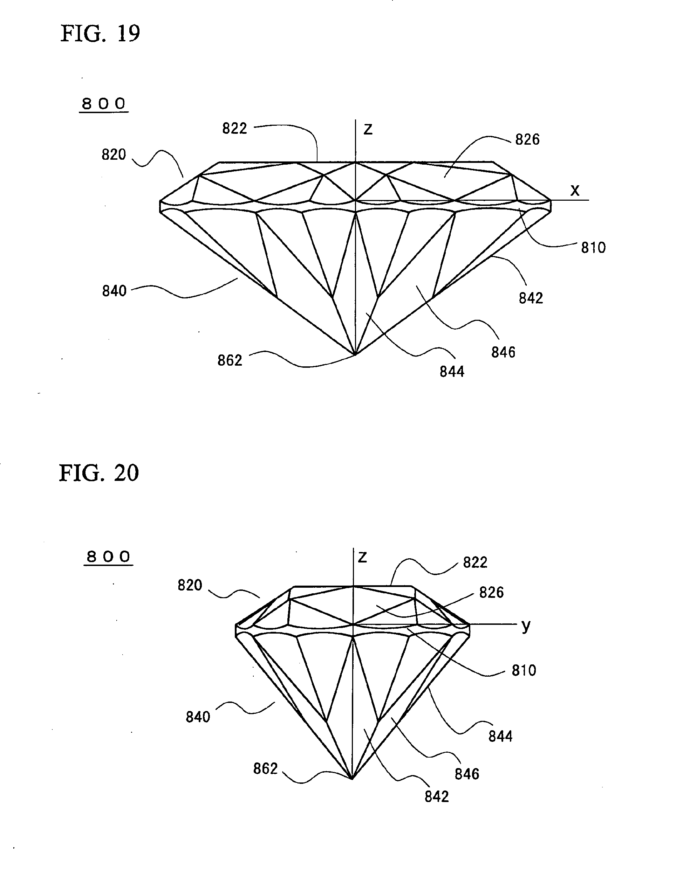

An example of an oval-cut diamond that is a round brilliant cut diamond having a girdle flatly deformed in a vertical direction is shown in FIGS. 17 to 20, which is an oval-cut diamond 800 of a comparative example. FIG. 17 shows a top plan view, FIG. 18 is a bottom plan view, FIG. 19 is a front view, and FIG. 20 is a side view. As is apparent from FIGS. 19 and 20, a girdle 810 has an equal height around a whole circumference of the girdle. In a crown 820, all crown main facets 826 have an equal crown angle (c) and a table facet 822 is flat in a y-axis direction. In a pavilion 840, each of pavilion main facets 842, 844 and 846 is a tetragon having two opposite vertexes composed of a bottom apex (culet) 862 and a point on a girdle lower ridge. Thus, a pavilion angle of the two pavilion main facets 842 extending in the x-axis direction is smaller, and a pavilion angle of the two pavilion main facets 844 extending in the y-axis direction is larger. A pavilion angle of the two pavilion main facets 846 provided in the midpoint between the x-axis direction and the y-axis direction is intermediate between the pavilion angle of the pavilion main facets 842 in the x-axis direction and the pavilion angle of the pavilion main facets 844 in the y-axis direction. The pavilion main facet 842 in the x-axis direction extends toward a central axis (a z-axis) passing a bottom apex 862, namely, a perpendicular of the pavilion main facet 842 crosses the central axis. The pavilion main facet 844 in the y-axis direction extends toward the central axis (the z-axis) passing the bottom apex 862, namely, a perpendicular of the pavilion main facet 844 crosses the central axis. However, a perpendicular of the pavilion main facet 846 does not extend toward the central axis (the z-axis).

Thus, in the x-axis direction, a pair of crown main facets 826 and a pair of pavilion main facets 842 positioned opposite to each other with respect to the central axis, and the table facet 822 have a common vertical plane (shown by thick broken lines in FIGS. 17 and 18) 872 within them. In the y-axis direction, a pair of crown main facets 826 and a pair of pavilion main facets 844 positioned opposite to each other with respect to the central axis, and the table facet 822 have a common vertical plane 874 within them. In the midpoint between the x-axis direction and the y-axis direction, however, a pair of crown main facets 826 positioned opposite to each other with respect to the central axis and the table facet 822 have a common vertical plane 876 within them, but pavilion main facets 846 do not have the vertical plane 876 within them and are not vertical. As shown in FIG. 18, a vertical plane 877 on a pavilion main facet 846 in the midpoint between the x-axis and the y-axis and a vertical plane 878 on a pavilion main facet 846 in the midpoint between a -x-axis and a -y-axis do not coincide with each other.

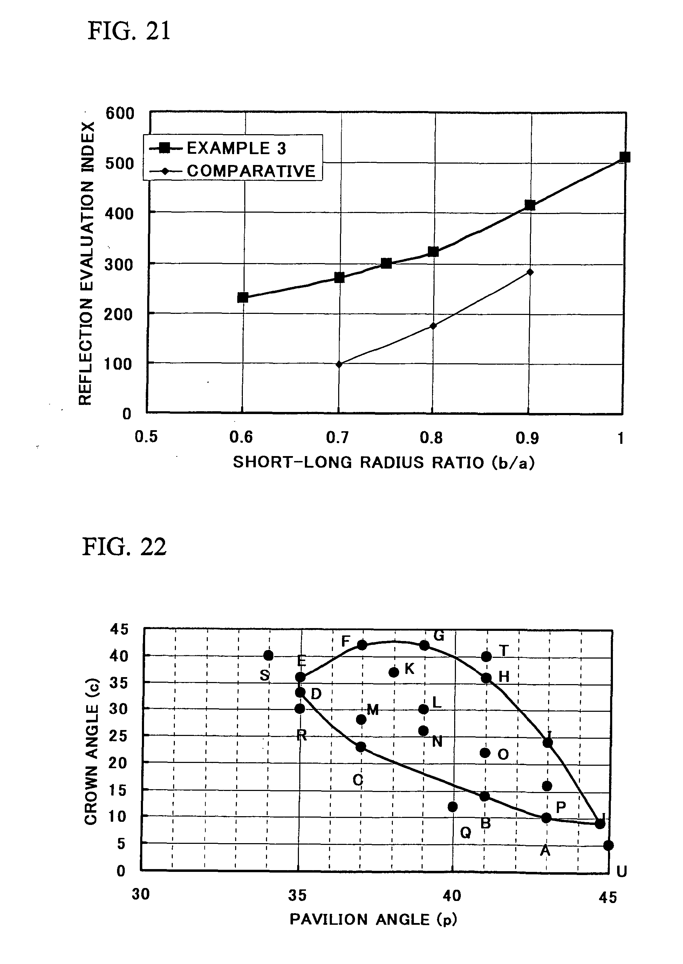

FIG. 21 shows, on a graph, the results of calculation of reflection evaluation indexes of the oval-cut diamond 300 or EXAMPLE 3 and the oval-cut diamond 800 of the comparative example described above. FIG. 21 shows, in a vertical line, the results of calculation of reflection evaluation indexes of the diamonds of EXAMPLE 3 and the comparative example with short-long radius ratios (b/a) in a horizontal line. The diamond 300 of EXAMPLE 3 has a pavilion angle of 38.5 degrees and a crown angle of 27.92 degrees, and the diamond 800 of the comparative example has a pavilion angle on the long axis side of 38.5 degrees and all crown angles of 27.92 degrees. As is apparent from the graph, at a short-long radius ratio (b/a) of 0.7, the reflection evaluation index of the diamond 300 of EXAMPLE 3 was about 270 and the reflection evaluation index of the comparative example was about 100, and the reflection evaluation index of the diamond 300 of EXAMPLE 3 was 270% of that of the comparative example. At a short-long radius ratio (b/a) of 0.8, the reflection evaluation index of the diamond 300 of EXAMPLE 3 was about 330 and the reflection evaluation index of the comparative example was about 170, and the reflection evaluation index of the diamond 300 of EXAMPLE 3 was about twice that of the comparative example.

At a short-long radius ratio (b/a) less than 0.6, there appears a facet extremely elongated and difficult to machine in an oval-cut diamond, and thus a short-long radius ratio (b/a) needs to be 0.6 or more. Further, as shown in FIG. 21, the reflection evaluation index of about 500 of the round brilliant cut diamond (a short-long radius ratio (b/a) of 1.0) becomes less than 250 at the short-long radius ratio (b/a) of 0.6 to reduce a brilliancy. At a short-long radius ratio (b/a) of 0.7 or more, the reflection evaluation index becomes 250 or more to enhance the brilliancy. Thus, the short-long radius ratio (b/a) of the oval-cut diamond needs to be 0.6 or more. On the other hand, if the short-long radius ratio (b/a) approaches 1.0, the diamond becomes nearly the round brilliant cut diamond, and the present invention needs not to be applied. Thus, the short-long radius ratio (b/a) needs to be less than 0.95.

### Regions of Pavilion Angle (p) and Crown Angle (c)

Table 2 shows the results of calculation of reflection evaluation indexes of samples A to U with different pavilion angles (P) and different crown angles (c) in an oval-cut diamond (a short-long radius ratio (b/a) of 0.8). FIG. 22 shows a graph drawn with the pavilion angles (p) in a horizontal line and the crown angles (c) in a vertical line for these samples. According to the test by the inventors, the oval-cut diamond (the short-long radius ratio (b/a) of 0.8) of the comparative example in FIGS. 17 to 20 had a maximum value of the reflection evaluation index of about 250. The samples with the reflection evaluation indexes of 250 or more are A to P among the samples A to U in Table 2, and the region of the pavilion angles (p) and the crown angles (c) of the samples is surrounded by a thick solid line in FIG. 22 as a preferred range in the present invention. The preferred pavilion angles (p) and crown angles (c) are in a region surrounded by a line connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on the graph drawn with the pavilion angles (p) in the horizontal line and the crown angles (c) in the vertical line.

**TABLE 2**

| Sample | Pavilion Angle (p) | Crown Angle (c) | Reflection Evaluation Index |
|---|---|---|---|
| A | 43 degrees | 10 degrees | over 250 |
| B | 41 | 14 | over 250 |
| C | 37 | 23 | over 250 |
| D | 35 | 33 | over 250 |
| E | 35 | 36 | 252 |
| F | 37 | 42 | 254 |
| G | 39 | 42 | 253 |
| H | 41 | 36 | 251 |
| I | 43 | 24 | 252 |
| J | 44.7 | 9 | over 250 |
| K | 38 | 37 | 313 |
| L | 39 | 30 | 309 |
| M | 37 | 28 | 302 |
| N | 39 | 26 | 345 |
| O | 41 | 22 | 314 |
| P | 43 | 16 | 298 |
| Q | 40 | 12 | 244 |
| R | 35 | 30 | 243 |
| S | 34 | 40 | 228 |
| T | 41 | 40 | 242 |
| U | 45 | 5 | 244 |

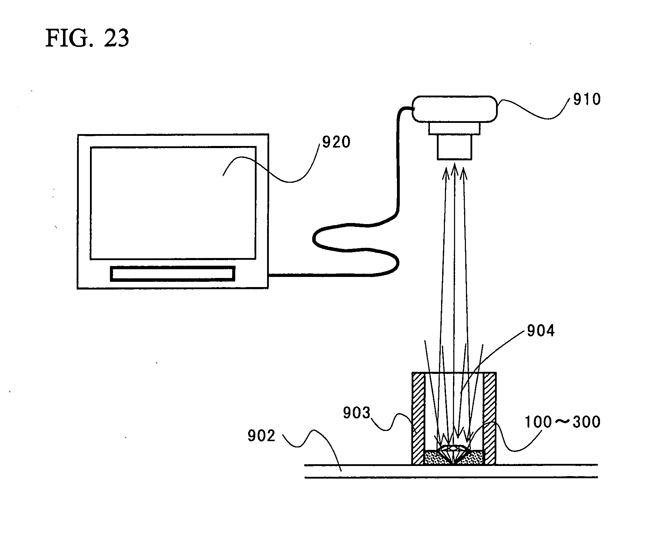

Observing a reflection light pattern using the oval-cut diamond having the structure of each of the examples of the present invention described above, there appeared a strong reflection light pattern on the table facet and each facet on the crown. As shown in FIG. 23, in the observation, the table facet was placed to face upward on a flat plate 902, light coming from around was blocked by a cylinder 903, and light 904 was applied at an angle of 20 degrees to 45 degrees with respect the central axis from the table facet and each facet on the crown of each of the oval-cut diamonds 100 to 300. The reflection light pattern that is reflected in each of the diamonds 100 to 300 and appears on the pavilion can be photographed by a digital camera 910, and observed by a CRT 920 or by printing the pattern. Strength of the reflection light can be measured by an optical sensor or the like directly or from an image on the print. Then, the cylinder 903 is removed, light is applied at an angle of 0 degrees to 90 degrees with respect to the central axis of each of the diamonds 100 to 300, the reflection light pattern is similarly observed, and strength of the reflection light is measured. Average strength of the reflection light is calculated to be strength of the reflection light.

As in the examples described above, the present invention may be applied to a modified oval-cut diamond by rotating the crown or the pavilion by a sixteenth revolution, which has an enhanced brilliancy of reflection light.

As the modified oval-cut diamond, the diamond having the oval girdle cross-section is described above, but the present invention can be applied to a diamond called "marquise" that has a contour line in a shape of two oval sectors (or circle sectors that are a kind of oval sectors) crossing each other on a girdle cross-section parallel to the table facet. The present invention can be also applied to a diamond called "pear-shape" that has a contour line in a shape of three oval sectors (or circle sectors that are a kind of oval sectors) crossing each other on a girdle cross-section parallel to the table facet.

## Claims

1. An oval-cut diamond comprising a columnar girdle, a crown provided above the girdle and having an octagonal table facet on a top of the crown and a pavilion provided below the girdle;
the girdle having an upper ridge between the crown and the girdle, a lower ridge between the pavilion and the girdle and a contour line of a girdle cross-section, parallel to the table facet, being in an oval or oval-like shape;
wherein the diamond has:
a central plane containing a long axis of the contour line and being a plane vertical to the table facet,
a straight central axis on the central plane crossing vertically the table facet at a center of the long axis of the contour line of the girdle cross-section,
a circumscribed circle having a center on the central axis and circumscribing the contour line at both ends of the long axis of teh contour line,
eight-dividing planes composed of the central plane, a plane containing a short axis of the contour line of the girdle cross-section and the central axis and planes dividing an angle around the central axis between the plane containing the short axis and the central axis and the central plane equally into two, and
second eight-dividing planes dividing an angle around the central axis between two neighboring eight-dividing planes;
the table facet having two opposite vertexes on the central plane and six vertexes symmetrical with respect to the central plane;
the crown having eight tetragonal crown main facets, eight triangular star facets and sixteen upper girdle facets on a diamond circumference between the girdle upper ridge and the table facet;
wherein each of the crown main facets is a tetragon having two opposite vertexes composed of a point, at which each of the eight-dividing planes crosses the girdle upper ridge, and each vertex of the table facet, and other vertexes each owned jointly with each of two other crown main facets neighboring on the crown main facet;
each of the star facets is a triangle having a bottom side coinciding with each side of the table facet and an opposite vertex coinciding with each of the other vertexes jointly owned by two neighboring crown main facets each having a vertex at each end of the bottom side; and
each of the upper girdle facets is a triangle or an oval sector having a bottom side coinciding with a side, whose end is on the girdle upper ridge, among sides of the crown main facets and a vertex on the girdle upper ridge;
the pavilion having a bottom apex at a lower end of the central axis, and eight pavilion main facets and sixteen lower girdle facets on the diamond circumference between the bottom apex and the girdle lower ridge;
wherein each of the pavilion main facets is a tetragon or a part of a tetragon extending from the bottom apex toward a crossing point of each of the second eight-dividing planes with the girdle lower ridge on the diamond circumference between the bottom apex and the girdle lower ridge, and having a side, whose end coincides with the bottom apex, jointly owned with each of two other pavilion main facets neighboring on the pavilion main facet;
each of the pavilion main facets is formed with opposite vertexes composed of a crossing point of each of the second eight-dividing planes with the circumscribed circle and the bottom apex and has a substantially equal pavilion angle with the table facet;
each of the lower girdle facets formed between the pavilion main facets and the girdle lower ridge is a triangle or an oval sector having a bottom side coinciding with a side having an end on the girdle lower ridge among sides of each of the pavilion main facets and a vertex on the girdle lower ridge; and
each of the lower girdle facets is disposed on each of both sides of each of the pavilion main facets;
wherein the oval or oval-like shape formed by the contour line of the girdle cross-section has a ratio of a short radius to a long radius (b/a) of 0.6 or more, in which a radius in a long axis direction of the shape (hereinafter, referred to as "long radius") is denoted as "a", and a radius in a short axis direction of the shape (hereinafter, referred to as "short radius") is denoted as "b",
wherein each pair of pairs of pavilion main facets, of which each pair is composed of two pavilion main facets positioned opposite to each other with respect to the central axis, and the table facet have a common plane vertical to all of them within them, and
each pair of pairs of crown main facets, of which each pair is composed of two crown main facets positioned opposite to each other with respect to the central axis, and the table facet have a common plane vertical to all of them within them.

2. An oval-cut diamond as set forth on claim 1, wherein each of the crown main facets has a substantially equal crown angle to the table facet.

3. An oval-cut diamond as set forth on claim 2, wherein a pavilion angle to the table facet each of the pavilion main facets has and a crown angle to the table facet each of the crown main facets has are in a region surrounded by lines connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on a graph drawn with pavilion angles (p) in a vertical line and crown angles (c) in a horizontal line.

4. An oval-cut diamond as set forth on claim 3, wherein the girdle has a substantially equal girdle height around a whole circumference of the girdle, and facets in the pavilion excluding lower girdle facets neighboring on the long axis have adjusting facets between a respective facet and the girdle lower ridge having a larger angle to the table facet than the pavilion angle and forming a ridge between the respective facet and each of the adjusting facets.

5. An oval-cut diamond as set forth on claim 1, wherein the girdle has a substantially equal girdle height around a whole circumference of the girdle, and facets in the pavilion excluding lower girdle facets neighboring on the long axis have adjusting facets between a respective facet and the girdle lower ridge having a larger angle to the table facet than the pavilion angle and forming a ridge between the respective facet and each of the adjusting facets.

6. An oval-cut diamond as set forth on claim 5, wherein the girdle has a substantially equal girdle height around a whole circumference of the girdle, and facets in the pavilion excluding lower girdle facets neighboring on the long axis have adjusting facets between a respective facet and the girdle lower ridge having a larger angle to the table facet than the pavilion angle and forming a ridge between the respective facet and each of the adjusting facets.

7. An oval-cut diamond as set forth on claim 1, wherein the contour line of the girdle cross-section parallel to the table is oval.

8. An oval-cut diamond as set forth on claim 1, wherein the contour line of the girdle cross-section parallel to the table is in a shape of two oval sectors crossing each other.

9. An oval-cut diamond as set forth on claim 1, wherein the contour line of the girdle cross-section parallel to the table is in a shape of three oval sectors crossing each other.
